(19) Europäisches Patentamt European Patent Office Office européen des brevets

(11) **EP 3 238 957 A1**

(12) **EUROPEAN PATENT APPLICATION**

(43) Date of publication:
01.11.2017 Bulletin 2017/44

(21) Application number: 17166002.0

(22) Date of filing: 11.04.2017

(51) Int Cl.:
*B60C 9/18* (2006.01)      *B32B 5/02* (2006.01)
*B32B 5/12* (2006.01)      *D03D 11/02* (2006.01)
*D03D 25/00* (2006.01)      *D03D 27/10* (2006.01)
*B60C 7/18* (2006.01)      *B60C 7/10* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 13.04.2016 US 201662321937 P

(71) Applicant: **The Goodyear Tire & Rubber Company**
**Akron, OH 44316 (US)**

(72) Inventor: **SPORTELLI, Francesco**
**3249 Bettembourg (LU)**

(74) Representative: **Kutsch, Bernd**
**Goodyear S.A.**
**Patent Department**
**Avenue Gordon Smith**
**7750 Colmar-Berg (LU)**

(54) **SHEAR BAND AND NON-PNEUMATIC TIRE**

(57)    A non-pneumatic tire (100) is disclosed comprising a ground contacting annular tread portion (200); a shear band (300), wherein the shear band (300) comprises or is formed of a first and second layer (340, 360, 460, 470, 760, 770, 810, 820) layer; a three dimensional spacer structure (350, 400, 700, 800) positioned between the first and second layer (340, 360, 460, 470, 760, 770, 810, 820); and a connecting web positioned between a tire hub (512) and the shear band (300). The shear band (300) comprises a three dimensional spacer structure (350, 400, 700, 800), wherein the three dimensional spacer structure comprises or is formed from a first and second layer of material (340, 360, 460, 470, 760, 770, 810, 820), each layer of material having first reinforcement members (462) which extend in a first and direction, and second reinforcement members (464) which extend in a second direction, wherein each layer of material (340, 360, 460, 470, 760, 770, 810, 820) is connected to each other by a plurality of connecting reinforcement members (490) which extend in a third direction.

FIG. 3A

EP 3 238 957 A1

## Description

Field of the Invention

The present invention relates generally to vehicle tires and non-pneumatic tires, and more particularly, to a shear band and a non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominant today. Pneumatic tires are efficient at carrying loads, because all of the tire structure is involved in carrying the load. Pneumatic tires are desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed gasses. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

The purpose of the shear band is to transfer the load from contact with the ground through tension in the spokes or connecting web to the hub, creating a top loading structure. When the shear band deforms, its preferred form of deformation is shear over bending. The shear mode of deformation occurs because of the inextensible membranes located on the outer portions of the shear band. Prior art non-pneumatic tire typically have a shear band made from rubber materials sandwiched between at least two layers of inextensible belts or membranes. The disadvantage to this type of construction is that the use of rubber significantly increases the cost and weight of the non-pneumatic tire. Another disadvantage to the use of rubber is that is generates heat, particularly in the shear band. Furthermore, the rubber in the shear band needs to be soft in shear, which makes it difficult to find the desired compound.

Thus, an improved non-pneumatic tire is desired that has all the features of the pneumatic tires without the drawback of the need for air inflation is desired.

Summary of the Invention

The invention relates to a shear band in accordance with claim 1 and to a non-pneumatic tire in accordance with claim 13.

Dependent claims refer to preferred embodiments of the invention.

At least one of the first and second the layer of material or both may be knitted or woven. Alternatively, one of both layers may be nonwoven.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first direction is aligned with the circumferential direction of the shear band.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first reinforcements are inextensible.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layers are parallel with respect to each other.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the connecting reinforcement members extend in a third direction, and the third direction is aligned with the radial direction of the shear band.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layers are separated by a distance Z in the range of 2 to 15 millimeters.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layers are separated by a distance Z in the range of 3 to 8 millimeters.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layers are separated by a distance Z in the range of 4 to 6 millimeters.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layer of material is knitted.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the first and second layer of material is woven.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the connecting members are curved.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the three dimensional spacer structure is formed of an auxetic material.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the connecting members are further divided into a first and second set, wherein the first set is crossed with respect to the second set.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the connecting members are perpendicular to the first and second layer of material.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the connecting members are angled with respect to the first and second layer of material.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the lateral ends of the shear band are tapered, so that the radial thickness of the center of the shear band is greater than the thickness at the outer ends of the shear band.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein the three dimensional spacer structure has an axial width, and the connecting members do not extend the full axial width of the three dimensional spacer structure.

One or more embodiments of the present invention provides a shear band comprising a three dimensional spacer structure, wherein the three dimensional spacer structure comprises or is formed from a first and second layer of material, each layer of material having first reinforcement members which extend in a first and direction, and second reinforcement members which extend in a second direction, wherein each layer of material is connected to each other by a plurality of connecting reinforcement members which extend in a third direction, wherein an axial width W of the connecting members is less than the axial width of the three dimensional spacer structure.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the three dimensional spacer structure is formed from a first and second layer of material interconnected by a plurality of connecting members.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the connecting members are aligned with the radial direction of the non-pneumatic tire.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layers are separated by a distance Z in the range of 2 to 25 millimeters.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layers are separated by a distance Z in the range of 3 to 10 millimeters, more preferably 5 to 10 mm.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layers are separated by a distance Z in the range of 4 to 6 millimeters.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layer of material is knitted.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layer of material is woven.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layer of material has a free area in the range of 30 to 70%.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the connecting members are curved.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the three dimensional spacer structure is formed of an auxetic material.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the connecting members are further divided into a first and second set, wherein the first set is crossed with respect to the second set.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the connecting members are perpendicular to the first and second layer of material.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the connecting members are angled with respect to the first and second layer of material.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the first and second layer of material is nonwoven.

One or more embodiments of the present invention provides a non-pneumatic tire comprising a ground contacting annular tread portion, a shear band, wherein the shear band comprises or is formed of a first and second inextensible layer, and a three dimensional spacer structure is positioned between the first and second inextensible layer, and a connecting web positioned between a hub and the shear band, wherein the lateral ends of the shear band are tapered, so that the radial thickness of the center of the shear band is greater than the thickness at the outer ends of the shear band.

Brief Description of the Drawings

The present invention will be better understood through reference to the following description and the appended drawings, in which:

FIG. 1 is a perspective view of a first embodiment of a non-pneumatic tire of the present invention;
FIGS. 2A is a cross-sectional view of a first embodiment of a shear band and outer tread;
FIG. 2B is a cross-sectional view of a variation of the first embodiment of a shear band and outer tread;
FIG. 3A is a perspective view of a first embodiment of an open three dimensional fabric structure, and FIG. 3B illustrates various possible configurations of the cross-members;

FIG. 4A is a perspective view of a second embodiment of a closed type of three dimensional fabric structure, and FIG. 4B illustrates various possible configurations of the fabric cross-members;

FIG. 5 is a perspective view of a third embodiment of a three dimensional fabric structure;

FIG. 6 is a perspective view of a fourth embodiment of a three dimensional fabric structure;

FIG. 7 is a perspective view of a fifth embodiment of a three dimensional fabric structure;

FIG. 8 is a perspective view of a sixth embodiment of a three dimensional fabric structure;

FIG. 9 is a perspective view of a seventh embodiment of a three dimensional fabric structure;

FIG. 10 is a perspective view of an eighth embodiment of a three dimensional fabric structure;

FIG. 11 is a perspective view of a ninth embodiment of a three dimensional fabric structure;

FIG. 12 is a deflection measurement on a shear band from a force F.

Definitions

The following terms are defined as follows for this description.

"Auxetic material" means a material that has a negative Poisson's ratio.

"Equatorial Plane" means a plane perpendicular to the axis of rotation of the tire passing through the centerline of the tire.

"Free area" is a measure of the openness of the fabric per DIN EN 14971, and is the amount of area in the fabric plane that is not covered by yarn. It is a visual measurement of the tightness of the fabric and is determined by taking an electronic image of the light from a light table passing through a six inch by six inch (2.54 cm x 2.54 cm) square sample of the fabric and comparing the intensity of the measured light to the intensity of the white pixels.

"Inextensible" means that a given layer has an extensional stiffness greater than 172 MPa.

"Knitted" is meant to include a structure producible by interlocking a series of loops of one or more yarns by means of needles or wires, such as warp knits and weft knits.

"Lateral" direction (or "axial" direction) means the direction parallel to the axis of the non-pneumatic tire on which the shear band may be mounted. It may also mean the direction in the plane of the shear band and perpendicular to the circumferential direction or the direction parallel to the length of the shear band, i.e. it means the width direction of the shear band.

"Radial" direction means the direction perpendicular to the axis of the non-pneumatic tire on which the shear band may be mounted. It may also mean the direction perpendicular to the plane of the shear band, i.e. it means the height or thickness direction of the shear band.

"Three dimensional spacer structure" means a three dimensional structure composed from two outer layers of fabric or material, each outer layer having reinforcement members (such as yarns, filaments or fibers) which extend in a first and second direction, wherein the two outer layers are connected together by reinforcement members (yarns, filaments or fibers) or other, preferably knitted layers that extend in a defined third direction. An "open" three dimensional spacer structure comprises individual pile fibers or reinforcements that connect the first and second layer. A "closed" three dimensional structure utilizes fabric piles that connect the first and second layers.

"Woven" is meant to include a structure produced by multiple yarns crossing each other preferably at right angles to form the grain, like a basket.

Detailed Description of Example Embodiments of the Invention

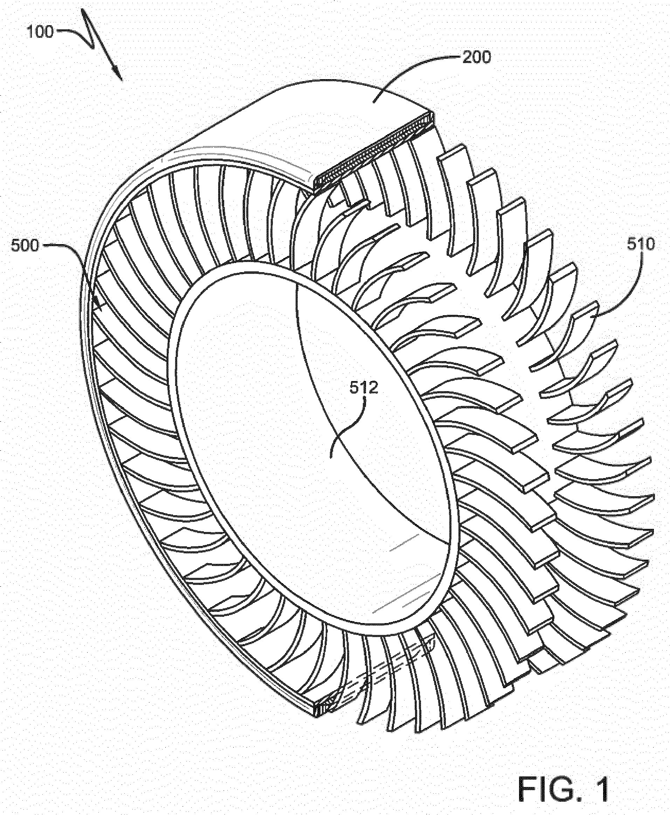

A first embodiment of a non-pneumatic tire 100 of the present invention is shown in Figure 1. The tire of the present invention includes a radially outer ground engaging tread 200, a shear band 300, and a connecting web 500. The tire tread 200 may include elements such as ribs, blocks, lugs, grooves, and sipes as desired to improve the performance of the tire in various conditions. The connecting web 500 is mounted on hub 512 and may have different designs, as described in more detail, below. The non-pneumatic tire of the present invention is designed to be a top loading structure, so that the shear band 300 and the connecting web 500 efficiently carry the load. The shear band 300 and the connecting web are designed so that the stiffness of the shear band is directly related to the spring rate of the tire. The connecting web is designed to be a stiff structure when in tension that buckles or deforms in the tire footprint and does not compress or carry a compressive load. This allows the rest of the connecting web not in the footprint area the ability to carry the load, resulting in a very load efficient structure. It is desired to allow the shear band to bend to overcome road obstacles. The approximate load distribution is preferably such that approximately 90-100% of the load is carried by the shear band and the upper portion of the connecting web, so that the lower portion of the connecting web carry virtually zero of the load, and preferably less than 10%.

**Shear band**

The shear band 300 is preferably an annular structure that is located radially inward of the tire tread 200 and functions to transfer the load from the bottom of the tire which is in contact with the ground to the spokes and to the hub, creating a top loading structure. The annular structure is called a shear band because the preferred form of deformation is shear over bending.

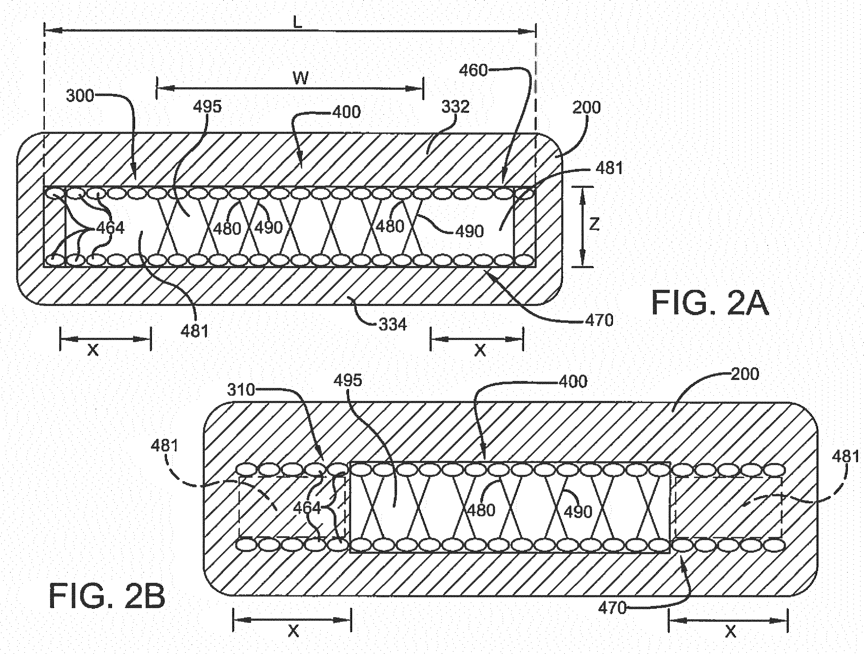

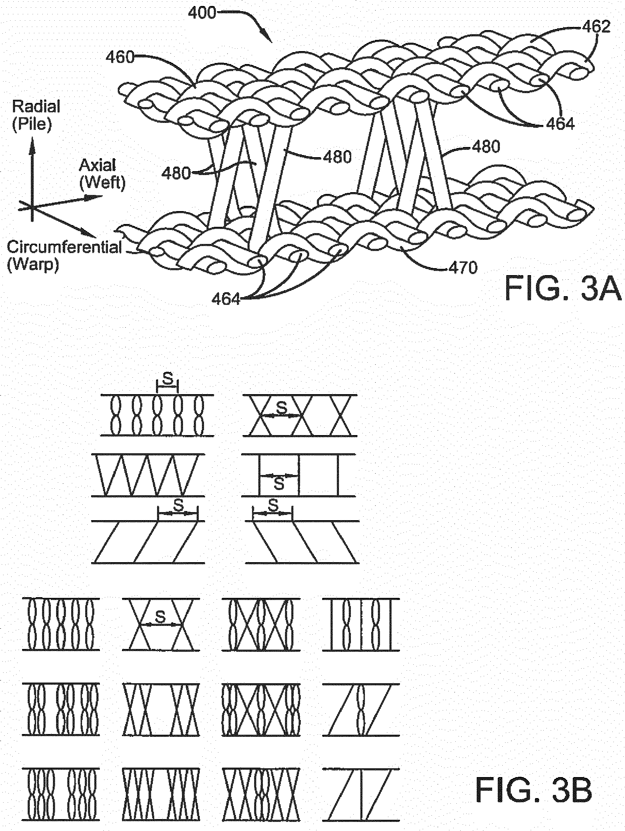

A first embodiment of a shear band 300 is shown in Figure 2A and comprises an open three dimensional spacer structure 400, shown in Fig. 3A. The three dimensional spacer structure 400 may be positioned between a first and second layer of gum rubber 332, 334 (not shown to scale). The gum rubber 332, 334 may be as thick as desired. The three dimensional spacer structure 400 is a type of structure that has a first and second layer of fabric 460, 470, wherein each layer of fabric is formed from a plurality of first reinforcement members 462 that extend in a first or weft direction and a plurality of second reinforcement members 464 which extend in a second or warp direction. The first and second reinforcement members 462, 464 may be perpendicular to each other as shown, or crossed at a desired angle. As shown, the reinforcement members 462 are interlaced or interwoven with the reinforcements 464. The first and second reinforcement layers may be knitted, woven, nonwoven, interlaced or non-interlaced. The first and second layers 462, 464 of fabric are preferably oriented parallel with respect to each other and are interconnected with each other by reinforcement connecting members 480, 490 that extend in a third or pile dimension. The perpendicular distance between the connecting layers 460, 470 or Z direction dimension of the three dimensional structure is in the range of from 2 millimeters to 25 millimeters, more preferably 3-10 millimeters, and even more preferably in the range of from 5 -10 mm.

The three dimensional spacer structure 400 may have different arrangement of the reinforcement connecting members as shown in Fig. 3B.

The three dimensional fabric structure 400 is preferably oriented in the shear band so that the first and second layers 460, 470 are aligned in parallel relation with the axial direction. The three dimensional fabric structure 400 has a substantial Z dimension thickness which is preferably aligned with the radial direction of the non-pneumatic tire. The open three dimensional fabric structure 400 thus comprises a plurality of connecting members 480, 490 which form open cells 495. The open cells 495 in the first embodiment remain empty.

The reinforcement member or reinforcement connecting member as used herein may comprise one or more of the following: yarn, wire, filament(s), fiber(s), or reinforcement cord(s). The reinforcement member or reinforcement cross member may be formed of glass fiber, carbon fiber, basalt fibers, organic fibers, nylon, aramid, polyester, steel or metal wire, or combinations thereof. Preferably, the reinforcement members 464 of the first and second layers 460, 470 of the three dimensional spacer may comprise inextensible reinforcements such as aramid, steel, polyester or blends thereof, that are preferably aligned with the tire circumferential direction. The inextensible reinforcements 464 may be oriented +/- 15 degrees or less with respect to the tire equatorial plane, and more preferably +/- 10 degrees or less with respect to the tire equatorial plane.

Preferably, the three dimensional fabric structure 400 and/or reinforcement member is treated with an RFL adhesive, which is a well-known resorcinol-formaldehyde resin/butadiene-styrene-vinyl pyridine terpolymer latex, or a blend thereof with a butadiene/styrene rubber latex, that is used in the tire industry for application to fabrics, fibers and textile cords for aiding in their adherence to rubber components (for example, see US-A-4,356,219.) The reinforcement members may be single end dipped members (i.e., a single reinforcement member is dipped in RFL adhesive or adhesion promoter.)

The three dimensional fabric structure 400 preferably has a density in the range of 700-1000 gram/meter2 as measured by DIN 12127. The compression stiffness of the three dimensional fabric structure 400 is preferably in a range from 50 to 600 kPa as measured by DIN/ISO 33861, and more preferably in a range from 100 to 250 kPa.

As shown in Fig 2A, the three dimensional spacer structure has an axial width L. The portion of the three dimensional spacer structure that has cross-members has an axial width W, wherein W is less than L. The three dimensional spacer structure has a cavity 481 at each lateral end, and having an axial width X. The width X of the cavity 481 can be adjusted as desired in order to tune the stiffness of the tire in the shoulder area. The cavity can remain empty as shown in Fig 2A, or it can be filled up to 100% as shown in Fig 2B. The cavity width and stiffness of the material filling the cavity can be selected as desired in order to tune the tire stiffness. X may range from 0 to 12% of the axial width L of the spacer structure.

The axial spacing S of the reinforcement connecting members 480 as shown in Fig 3B may also be adjusted in order to control the stiffness of the shear band. The Spacing S may range from 3 mm to 8 mm.

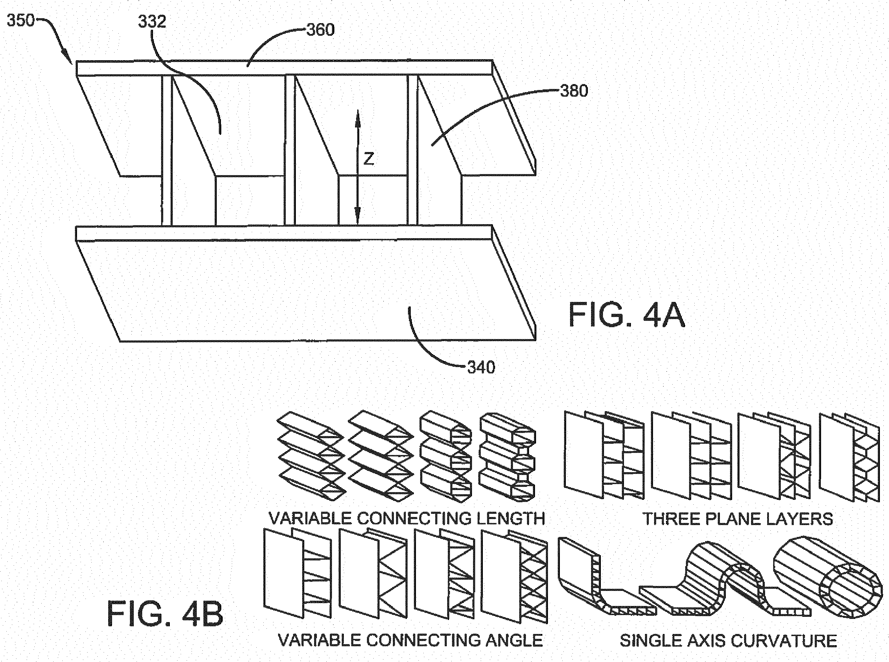

Any of the above described embodiments of the shear band may utilize the three dimensional structure shown in Figure 4A. The three dimensional structure 350 shown in Figure 4A includes a first knitted or woven layer 360 of fabric, and a second knitted or woven layer 340 of fabric. The first and second layers are joined together by a plurality of cross members 380. The cross members 380 are connected to the first and second woven layers at a 90 degree angle. The first and second woven layers 360, 340 are preferably oriented in parallel relation to the axial direction. The three dimensional spacer structure 350 is an example of a closed structure, because the cross members 380 are a close-knit fabric and not "see through". The three dimensional spacer structure 350 may have variable connecting length, multiple layers, variable connecting angles, and single axis curvature as shown in Fig. 4B.

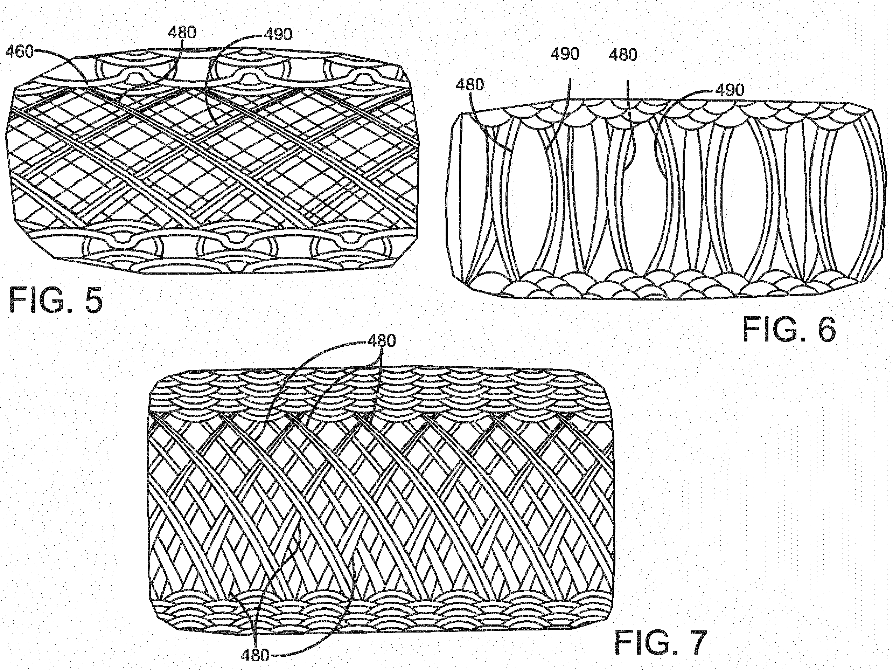

Any of the above described embodiments of the shear band may utilize the three dimensional structure shown in Figures 5-7, which illustrate various different configurations of the cross members 480, 490.

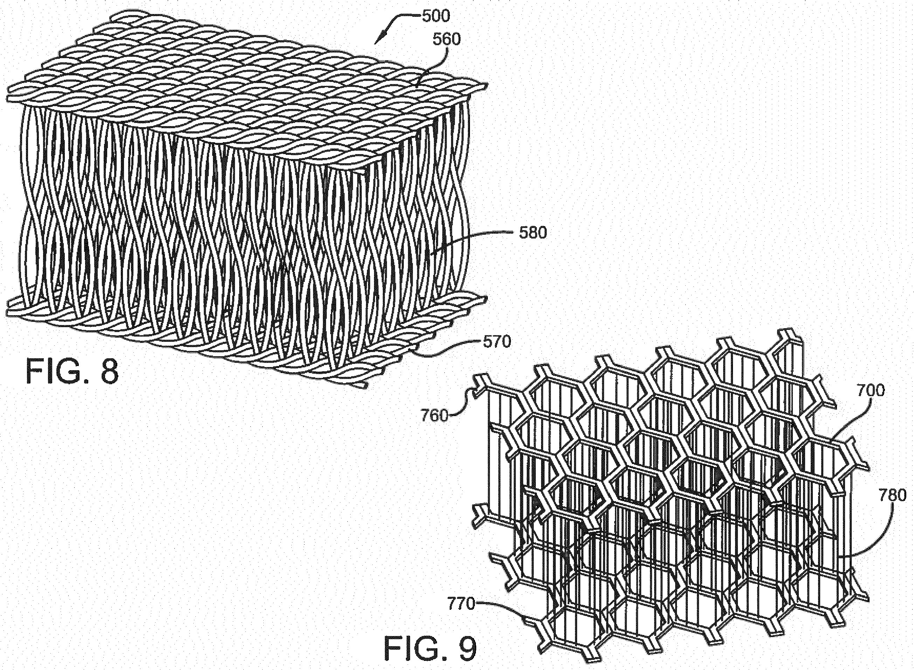

Any of the above described embodiments of the shear band may utilize the three dimensional structure shown in Figure 8. The three dimensional structure 500 comprises a first woven layer 560 of fabric, and a second woven layer 570 of fabric. The first and second layers are joined together by a plurality of cross members 580 formed in the shape of an "8".

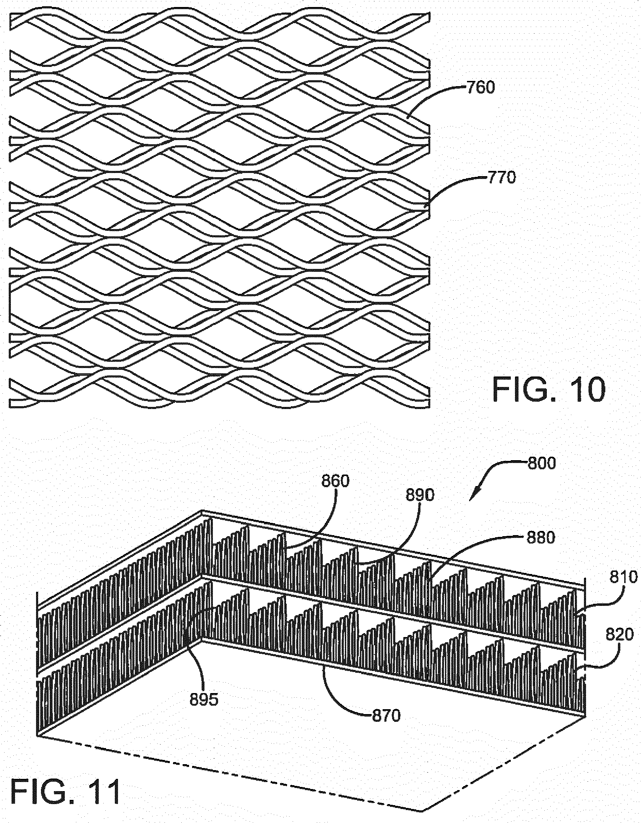

Any of the above described embodiments of the shear band may utilize the three dimensional structure shown in Figure 9 or 10. The three dimensional structure 700 of Figure 9 comprises a first knit layer 760 of fabric, and a second knit layer 770 of fabric. The first and second layers are joined together by a plurality of knitted spacing threads 780. The first and second layers 760,770 each have openings formed by a plurality of meshes, and wherein channels are formed between the knit fabric layers and are free of spacer threads.

Any of the above described embodiments of the shear band may utilize the three dimensional structure shown in Figure 11. The three dimensional structure 800 comprises two or more deck layers 810,820. The three dimensional structure 800 has a first woven layer 860 of fabric, a second woven layer 870 of fabric, and a middle woven layer 880. The first and middle layers 860,880 are joined together by a plurality of cross members 890. The second and middle layers 870,880 are also joined together by a plurality of cross members 895. The cross members 890, 895 may be angled or curved as shown in Figures 4-8.

Any of the above described embodiments of the three dimensional fabric structure may have a density in the range of 700-1000 gram/meter2 as measured by DIN 12127. The compression stiffness of any of the three dimensional fabric structure may range from 50 to 600 kPa as measured by DIN/ISO 33861, and more preferably range from 100 to 250 kPa.

It is additionally preferred that the lateral ends of the shear band be tapered, so that the radial thickness of the center of the shear band is greater than the thickness at the outer ends of the shear band.

Shear Band Properties

The shear band has an overall shear stiffness GA. The shear stiffness GA may be determined by measuring the deflection on a representative test specimen taken from the shear band. The upper surface of the test specimen is subjected to a lateral force F as shown below. The test specimen is a representative sample taken from the shear band and having the same radial thickness as the shear band. The shear stiffness GA is then calculated from the following equation:

$$GA = F * L / \Delta X$$

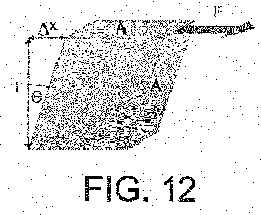

where F is the shear load, L is the shear layer thickness, and delta X is the shear deflection (see Fig. 12).

The shear band has an overall bending stiffness EI. The bending stiffness EI may be determined from beam mechanics using the three point bending test. It represents the case of a beam resting on two roller supports and subjected to a concentrated load applied in the middle of the beam. The bending stiffness EI is determined from the following equation: EI = PL3/48* $\Delta$X, where P is the load, L is the beam length, and $\Delta$X is the deflection.

It is desirable to maximize the bending stiffness of the shear band EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shear band is acceptable in the range of 0.02 to 100 with an ideal range of 1 to 50.

The shear band 300 preferably can withstand a maximum shear strain in the range of 15-30%.

The shear band preferably has a GA/EI in the range of 0.01 to 20, or a EA/EI ratio in the range of 0.02 to 100, or a spring rate in the range of 20 to 2000, as well as any combinations thereof. More preferably, the shear band has a GA/EI ratio of 0.01 to 5, or an EA/EI ratio of 1 to 50 and any subcombinations thereof. The shear band may have a spring rate of 77.11 kg per 2.54 cm (or of 170 lb./in). The tire tread is preferably wrapped about the shear band and is preferably integrally molded to the shear band.

Connecting Web

The non-pneumatic tire of the present invention further includes a connecting web 500 as shown in Figure 1. The connecting web preferably comprises a plurality of circumferentially aligned spokes 510 that extend from an inner radius to an outer radius. The spokes are preferably oriented in the radial direction. The spokes may be curved or straight. Preferably, the non-pneumatic tire comprises two sets of circumferentially aligned spokes. The spokes may have different cross-sectional designs. The spokes functions to carry the load transmitted from the shear layer. The spokes are primarily loaded in tension and shear, and carry no load in compression. Each spoke as described herein has an axial thickness A that is substantially less than the axial thickness AW of the non-pneumatic tire. The axial thickness A is preferably in the range of from 5-20% of AW, more preferably 5-10% AW. If more than one disk is utilized, than the axial thickness of each disk may vary or be the same.

The spokes 510 preferably extend in the radial direction. The spokes 510 are designed to bulge or deform in the radial direction. When the non-pneumatic tire is loaded, the spokes will deform when passing through the contact patch with substantially no compressive resistance, supplying zero or insignificant compressive force to load bearing. The predominant load of the spokes is through tension and shear, and not compression.

The spokes are preferably formed of an elastic material such as rubber or a thermoplastic elastomer.

The radial spokes are designed such that the spokes have a low resistance to radial deformation and a higher resistance to the lateral deformation of the tire.

If the material selected is a thermoplastic elastomer, then it is preferred to have the following properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is less than -25 degree Celsius, and more preferably less than -35 degree Celsius. The yield strain at break is more than 30%, and more preferably more than 40%. The elongation at break is more than or equal to the yield strain, and more preferably, more than 200%. The heat deflection temperature is more than 40 degree C under 0.45 MPa, and more preferably more than 50 degree C under 0.45 MPa. No break result for the Izod and Charpy notched test at 23 degree Celsius using the ISO 179/ISO180 test method. Two suitable materials for the disk are commercially available by DSM products and sold under the trade name ARNITEL PL 420H and ARNITEL PL461.

**Claims**

1. A shear band comprising a three dimensional spacer structure (350, 400, 700, 800), wherein the three dimensional spacer structure comprises or is formed from a first and second layer of material (340, 360, 460, 470, 760, 770, 810, 820), each layer of material having first reinforcement members (462) which extend in a first and direction, and second reinforcement members (464) which extend in a second direction, wherein each layer of material (340, 360, 460, 470, 760, 770, 810, 820) is connected to each other by a plurality of connecting reinforcement members (490) which extend in a third direction.

2. The shear band of claim 1 wherein the first direction is aligned with a circumferential direction of the shear band (300) and/or wherein the first and second layers (340, 360, 460, 470, 760, 770, 810, 820) are parallel with respect to each other.

3. The shear band of claim 1 or 2 wherein the first reinforcement members (462) are inextensible.

4. The shear band of at least one of the previous claims wherein the connecting reinforcement members (490) extend in a third direction, the third direction being aligned with a radial direction of the shear band (300) and/or wherein the connecting reinforcement members (490) are perpendicular to the first and second layer of material (340, 360, 460, 470, 760, 770, 810, 820).

5. The shear band of at least one of the previous claims wherein the first and second layers (340, 360, 460, 470, 760, 770, 810, 820) are separated by a distance (Z) in the range of of from 2 to 25 millimeters, preferably 2 to 15 mm, more preferably 3 to 10 mm, 3 to 8 mm, 5 to 10 mm or 4 to 6 mm.

6. The shear band of at least one of the previous claims wherein the connecting members (490) are curved.

7. The shear band of at least one of the previous claims wherein the three dimensional spacer structure (350, 400, 700, 800) comprises or is formed of an auxetic material.

8. The shear band of at least one of the previous claims wherein the connecting members (490) are further divided into a first and second set, wherein the first set is crossed with respect to the second set.

9. The shear band of at least one of the previous claims wherein the connecting members (490) are angled with respect to the first and second layer of material (340, 360, 460, 470, 760, 770, 810, 820), the angle preferably being in a range of from 5 to 60 degrees, more preferably 5 to 45 degrees.

10. The shear band of at least one of the previous claims wherein the lateral ends or the axially outer ends of the shear band (300) are tapered, so that the radial thickness of the center of the shear band (300) is greater than the thickness at the laterally or axially outer ends of the shear band (300)

11. The shear band of at least one of the previous claims wherein the three dimensional spacer structure (350, 400, 700, 800) has an axial width, and wherein the connecting members (490) do not extend the full axial width of the three dimensional spacer structure (350, 400, 700, 800); and/or wherein an axial width (W) of the connecting members (490) is less than the axial width of the three dimensional spacer structure (350, 400, 700, 800).

12. The shear band of at least one of the previous claims wherein the first and second layer of material (340, 360, 460, 470, 760, 770, 810, 820) has a free area in the range of from 30 to 70%.

13. A non-pneumatic tire comprising a ground contacting annular tread portion (200); a shear band (300), wherein the shear band (300) comprises or is formed of a first and second layer (340, 360, 460, 470, 760, 770, 810, 820) layer; a three dimensional spacer structure (350, 400, 700, 800) positioned between the first and second layer (340, 360, 460, 470, 760, 770, 810, 820); and a connecting web positioned between a tire hub (512) and the shear band (300).

14. The non-pneumatic tire of claim 13 wherein the first and second layer (340, 360, 460, 470, 760, 770, 810, 820) layer are inextensible.

15. The non-pneumatic tire of claim 13 or 14 wherein the shear band (300) is a shear band (300) in accordance with at least one of the previous claims 1 to 13.

FIG. 1

FIG. 2A

FIG. 2B

FIG. 3A

FIG. 3B

FIG. 4A

FIG. 4B

VARIABLE CONNECTING LENGTH

THREE PLANE LAYERS

VARIABLE CONNECTING ANGLE

SINGLE AXIS CURVATURE

EP 3 238 957 A1

FIG. 5

FIG. 6

FIG. 7

EP 3 238 957 A1

FIG. 8

FIG. 9

16

FIG. 10

FIG. 11

FIG. 12

Europäisches
Patentamt
European
Patent Office
Office européen
des brevets

# EUROPEAN SEARCH REPORT

Application Number

EP 17 16 6002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 202 787 813 U (WU BOMING) 13 March 2013 (2013-03-13) | 1-6,9-12 | INV. B60C9/18 |
| A | * cf. English translation; figures 1,2,2A,3,4 * | 7,8, 13-15 | B32B5/02 B32B5/12 D03D11/02 |
| X | CN 201 648 829 U (CHANGZHOU TOPWEAVING NEW MATERIAL TECH CO LTD) 24 November 2010 (2010-11-24) | 1-6, 8-10,12 | D03D25/00 D03D27/10 B60C7/18 |
| A | * cf. English translation; claims 1-3; figures 1,2 * | 7,11, 13-15 | B60C7/10 |
| X | DE 199 44 437 A1 (VOLKSWAGEN AG [DE]) 22 March 2001 (2001-03-22) | 1-6, 8-10,12 | |
| A | * column 2, line 38 - column 5, line 65; figure 2 * | 7,11, 13-15 | |
| X | US 2 502 101 A (MORGAN GEORGE A ET AL) 28 March 1950 (1950-03-28) | 1-6, 8-10,12 | |
| A | * column 2 - column 5; figures 1-9 * | 7,11, 13-15 | |
| X | DE 36 03 538 A1 (AUTOFLUG GMBH [DE]) 6 August 1987 (1987-08-06) | 1-6,8-11 | TECHNICAL FIELDS SEARCHED (IPC) |
| A | * the whole document * | 7,12-15 | B60C B32B D03D |
| X | US 2011/168313 A1 (MA ZHENG-DONG [US] ET AL) 14 July 2011 (2011-07-14) | 1-10,12 | |
| Y | * paragraph [0041] - paragraph [0049]; | 13-15 | |
| A | claim 18; figures 6-19 * | 11 | |
| X | US 2011/240190 A1 (SUMMERS JOSHUA D [US] ET AL) 6 October 2011 (2011-10-06) | 1-7,9, 10,13-15 | |
| Y | * paragraph [0008] - paragraph [0083]; | 13-15 | |
| A | figures 1-6,9-12,16A,16B,17A,17B,19 * | 8,11,12 | |

-/--

The present search report has been drawn up for all claims

| Place of search | Date of completion of the search | Examiner |
|---|---|---|
| Munich | 28 August 2017 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 17 16 6002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 118 276 A (UNIV TSINGHUA) 29 October 2014 (2014-10-29) | 1-4, 8-10,12 | |
| Y | * figures * | 13-15 | |
| A | | 5-7 | |
| | ----- | | |
| X | US 2011/240194 A1 (SUMMERS JOSHUA D [US] ET AL) 6 October 2011 (2011-10-06) | 1-10, 13-15 | |
| Y | * the whole document * | 13-15 | |
| A | | 11,12 | |
| | ----- | | |
| X | WO 2012/098130 A1 (VDS WEAVING NV [BE]; VAN DEN STORME GUY [BE]; VAN DEN STORME MANUEL [B) 26 July 2012 (2012-07-26) | 1-6, 8-10,12 | |
| Y | * page 5 - page 19; figures 1-12,13 * | 15 | |
| A | | 7,11 | |
| | ----- | | |
| X | US 2012/318417 A1 (DOTSON MICHAEL EDWARD [US] ET AL) 20 December 2012 (2012-12-20) | 1-6,8-15 | |
| Y | * paragraph [0055]; figures 1-14 * | 13-15 | |
| A | | 7 | |
| | ----- | | TECHNICAL FIELDS SEARCHED (IPC) |

The present search report has been drawn up for all claims

| Place of search | Date of completion of the search | Examiner |
|---|---|---|
| Munich | 28 August 2017 | Jung, Wolfgang |

EPO FORM 1503 03.82 (P04C01)

page 2 of 2

## ANNEX TO THE EUROPEAN SEARCH REPORT
## ON EUROPEAN PATENT APPLICATION NO.

EP 17 16 6002

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2017

| Patent document cited in search report | | Publication date | Patent family member(s) | | Publication date |
|---|---|---|---|---|---|
| CN 202787813 | U | 13-03-2013 | NONE | | |
| CN 201648829 | U | 24-11-2010 | NONE | | |
| DE 19944437 | A1 | 22-03-2001 | NONE | | |
| US 2502101 | A | 28-03-1950 | NONE | | |
| DE 3603538 | A1 | 06-08-1987 | NONE | | |
| US 2011168313 | A1 | 14-07-2011 | CN | 102529583 A | 04-07-2012 |
| | | | US | 2011168313 A1 | 14-07-2011 |
| US 2011240190 | A1 | 06-10-2011 | NONE | | |
| CN 104118276 | A | 29-10-2014 | NONE | | |
| US 2011240194 | A1 | 06-10-2011 | NONE | | |
| WO 2012098130 | A1 | 26-07-2012 | NONE | | |
| US 2012318417 | A1 | 20-12-2012 | CN | 102791496 A | 21-11-2012 |
| | | | EP | 2544905 A1 | 16-01-2013 |
| | | | JP | 5588062 B2 | 10-09-2014 |
| | | | JP | 2013522110 A | 13-06-2013 |
| | | | KR | 20120109658 A | 08-10-2012 |
| | | | RU | 2012143551 A | 20-04-2014 |
| | | | US | 2012318417 A1 | 20-12-2012 |
| | | | WO | 2011112920 A1 | 15-09-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4356219 A